# EUROPEAN PATENT APPLICATION

(11) **EP 1 328 029 A1**
(43) Date of publication of application: **16.07.2003**
(21) Application number: 01972620.7
(22) Date of filing: 28.09.2001
(51) Int. Cl.: H01M 4/96, H01M 4/88, H01M 8/10

(54) **FUEL CELL AND PRODUCTION METHOD THEREFOR**

(30) Priority: 29.09.2000 JP 2000301408
(71) Applicant: Sony Corporation, Tokyo 141-0001 (JP)
(72) Inventor: YAMAURA, Kiyoshi, Shinagawa-ku, Tokyo 141-0001 (JP); IMAZATO, Minehisa, Shinagawa-ku, Tokyo 141-0001 (JP)
(74) Representative: Rupp, Christian, Dipl.-Phys.
(86) International application number: PCT/JP01/08601
(87) International publication number: WO 02/027831

(57) **Abstract**

A fuel cell in which optimum proton conductivity is maintained even in a dry atmosphere and in which the output is not lowered. The fuel cell includes a fuel electrode and an oxygen electrode arranged facing each other with a proton conductor film in-between. The fuel electrode and the oxygen electrode are formed of powders of a carbonaceous material as an electrode material. A proton conductor comprised of a carbonaceous material mainly composed of carbon and proton dissociative groups introduced into the carbonaceous material is present on the surfaces of the fuel and oxygen electrodes. For preparing the electrodes, the powder of a carbonaceous material as the electrode material are dipped in a solvent containing a proton conductor comprised of the carbonaceous material mainly composed of carbon and proton dissociative groups introduced into the carbonaceous material. The proton conductor comprised of the carbonaceous material (such as carbon clusters, e.g., fullerene or carbon nano-tubes) mainly composed of carbon and proton dissociative groups introduced into the carbonaceous material exhibits optimum proton conductivity without humidification.

## Description

### Technical Field

This invention relates to a fuel cell for producing the electromotive force by reaction of a fuel, such as hydrogen, with oxygen. This invention also relates to a method for the preparation of the fuel cell.

### Background Art

Recently, a need is felt for the a substitute clean energy, which may take the place of a fossil fuel, such as petroleum. For example, a hydrogen gas fuel is attracting notice.

Since hydrogen has a large energy contained per unit weight and, in use, does not emit obnoxious gases or gases contributing to global warming, it may be said to be an ideal energy source which is clean and moreover plentiful in supply.

In particular, researches in a fuel cell, capable of recovering an electrical energy form the hydrogen energy, are proceeding briskly, and expectations are being made for application thereof in large scale power generation, on-site self-generation of power or as a power source for an electric vehicle.

The fuel cell includes a fuel electrode, such as a hydrogen electrode, and an oxygen electrode, arranged on both sides of a proton conductor film. By supplying fuel (hydrogen) and oxygen to these electrodes to induce a cell reaction to develop an electromotive force. In preparing the fuel cell, the proton conductor film, fuel electrode and the oxygen electrode are routinely molded separately and bonded together.

Meanwhile, in this sort of the fuel cell, how to cause smooth proton conduction to take place represents a crucial point in improving the cell performance.

Thus, it may be thought to be effective to get an electrode material coated with a proton conductor to cause protons to be migrated smoothly from the electrode to the proton conductor film through this proton conductor.

However, the materials so far envisaged as proton conductor, including a polymer material capable of conducting protons (hydrogen ions), such as perfluorocosulfonic acid resin, needs to be humidified in order to maintain satisfactory protonic conductivity, such that no satisfactory proton conductivity can be maintained in a dry atmosphere.

On the other hand, the aforementioned polymer material is not satisfactory as to electronic conductivity. In the fuel cell, not only protons but also electrons need to be migrated promptly towards terminals. The polymer material is poor in electronic conductivity such that the internal resistance tends to be increased.

### Disclosure of the Invention

It is therefore an object of the present invention to provide a fuel cell capable of maintaining optimum proton conductivity even in a dry atmosphere without lowering an output, and a method for the preparation for such fuel cell.

In one aspect, the present invention provides a fuel cell having a fuel electrode and an oxygen electrode arranged facing each other with a proton conductor film in-between, wherein the fuel electrode and/or the oxygen electrode has powders of a carbonaceous material as an electrode material, there being on the surfaces of said fuel electrode and the oxygen electrode a proton conductor comprised of a carbonaceous material mainly composed of carbon and proton dissociative groups introduced in the carbonaceous material.

In another aspect, the present invention provides a method for the preparation of a fuel cell including adding powders of a carbonaceous material as a material for a fuel electrode and/or an oxygen electrode into a solvent containing a proton conductor comprised of a carbonaceous material mainly composed of carbon and proton dissociative groups introduced into the carbonaceous material, and coating the surfaces of the powder of a carbonaceous material with the proton conductor.

It should be noted that the "proton dissociative groups" mean functional groups from which protons (H⁺) can be detached on electrical dissociation.

The proton conductor comprised of the carbonaceous material (such as carbon clusters, e.g., fullerene or carbon nano-tubes) mainly composed of carbon and proton dissociative groups introduced into the carbonaceous material exhibits optimum proton conductivity without humidification.

Thus, if such proton conductor is present on the surface of the powder of a carbonaceous material as the electrode material, sufficient proton conductivity is maintained even in a dry atmosphere.

In addition, since the electrode material coated with the proton conductor is a carbonaceous material, optimum electronic conductivity is manifested simultaneously.

The other objects of the present invention and specific advantages provided by the present invention will be clarified further from the following description of embodiments.

### Brief Description of the Drawings

Fig.1 is a schematic cross-sectional view showing a basic structure of a fuel cell.
Fig.2 is a schematic view showing the coating state of powders of a carbonaceous material by a proton conductor.
Fig.3 is a schematic view showing various examples of a carbon cluster.
Fig.4 is a schematic view showing another example of a carbon cluster (partial fullerene structure).
Fig.5 is a schematic view showing still another example of a carbon cluster (diamond structure).
Fig.6 is a schematic view showing yet another example of a carbon cluster (plural clusters bonded together).
Fig.7 is a schematic view showing a typical arc discharge device used for the preparation of a carbon nano-tube.
Figs.8A to 8C are schematic views showing a variety of carbonaceous materials contained in a carbon soot prepared on arc discharge.
Fig.9 is a schematic view showinga specified illustrative structure of a fuel cell.
Fig. 10 is a graphical representation showing output-time dependency of the example and comparative example.

### Best Mode for Carrying Out the Invention

Referring to the drawings, a fuel cell and a method for the preparation thereof, according to the present invention, will be explained in detail.

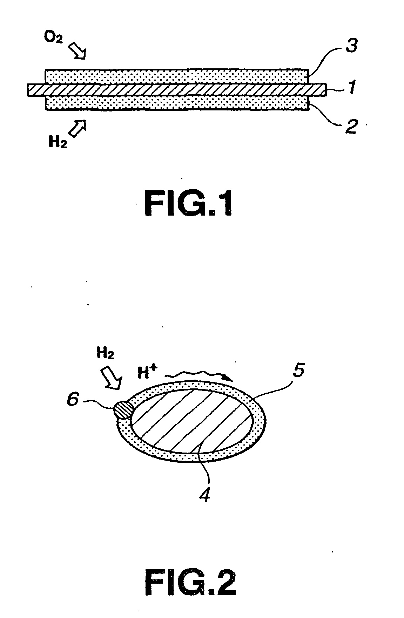

The structure of the fuel cell is basically made up of a proton conductor film 1 exhibiting proton conductivity and a fuel electrode 2 and an oxygen electrode 3 formed on respective surfaces of the proton conductor film 1, as shown in Fig.1.

If hydrogen, for example, is supplied to the fuel electrode 2, whilst oxygen is supplied to the oxygen electrode 3, cell reaction occurs to produce an electromotive force. In the case of a so-called direct methanol system, methanol may also be supplied as a hydrogen source to the fuel electrode 2.

The fuel electrode 2 and the oxygen electrode 3 are formed by powders of a carbonaceous material, as an electrode material, and are prepared on molding. According to the present invention, the surface of the powder of a carbonaceous material 4 is coated with a proton conductor 5, as shown in Fig.2, to permit proton conduction to proceed smoothly. In Fig.2, a metal catalyst 6 is also shown.

If the fuel electrode 2 is configured as indicated above, and the fuel supplied is hydrogen, it is converted into a proton and an electron, with the metal catalyst 6 as a reaction point. Of these, the proton is migrated through the proton conductor 5 towards the proton conductor film 1. On the other hand, the electron is caused to flow towards a terminal based on electron conductivity of the powder of a carbonaceous material 4 forming a matrix of the electrode 2.

For coating the surface of the powder of a carbonaceous material 4 with the proton conductor 5, it is sufficient if the proton conductor is dispersed in a solvent, with the powder of a carbonaceous material then being dipped therein and subsequently dried.

As the material for the proton conducting material forming the proton conductor 5, such a proton conductor comprised of a carbonaceous material, formed mainly of carbon, as a matrix, and proton dissociative groups introduced therein, is desirable.

The proton dissociative groups may be enumerated by -OH, -OSO₃H, -SO₃H, -COOH, and -OPO(OH)₂.

In this proton conductor, protons are migrated through the proton dissociative groups to manifest ion conductivity.

As the carbonaceous material, forming the matrix, any suitable material, mainly composed of carbon, may be used. It is however necessary for the ion conductivity to be higher than the electronic conductivity after introducing the proton dissociative groups.

Specifically, a carbon cluster, as an aggregate of carbon atoms, or tubular carbon materials (so-called carbon nano-tubes), may be used as the carbonaceous material.

Among a variety of carbon clusters, fullerene, a fullerene structure having an opening end at least at a portion thereof, or a diamond structure, is preferred.

This carbon cluster is explained further in detail.

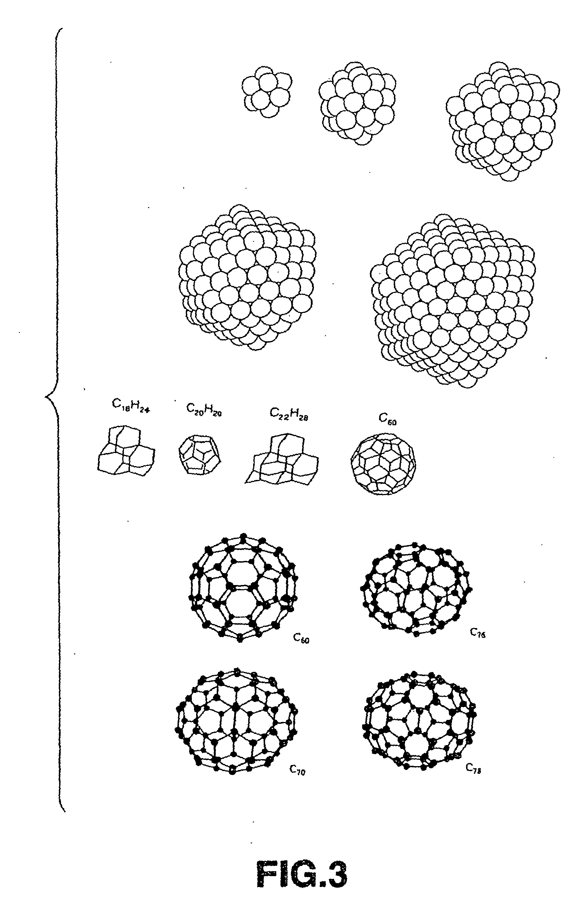

A cluster routinely means an aggregate of several to hundreds of atoms, bound or flocculated together. If these atoms are carbon atoms, such flocculation or aggregation improves proton conductivity while simultaneously holding chemical properties to provide for sufficient film strength and for ease in forming layers. A 'cluster mainly composed of carbon' means an aggregate of several to hundreds of carbon atoms regardless of the type of the carbon-carbon bonds. Such cluster may, however, not be composed only of carbon atoms, such that other atoms may be present together with the carbon atoms. Thus, in order to encompass such case, an aggregate the major portion of which is composed of carbon atoms is termed a carbon cluster. Examples of these aggregates are shown in Figs.3 to 6 in which the proton dissociative groups are omitted. It may be seen that there are a wide latitude for selection of types of proton conducting materials.

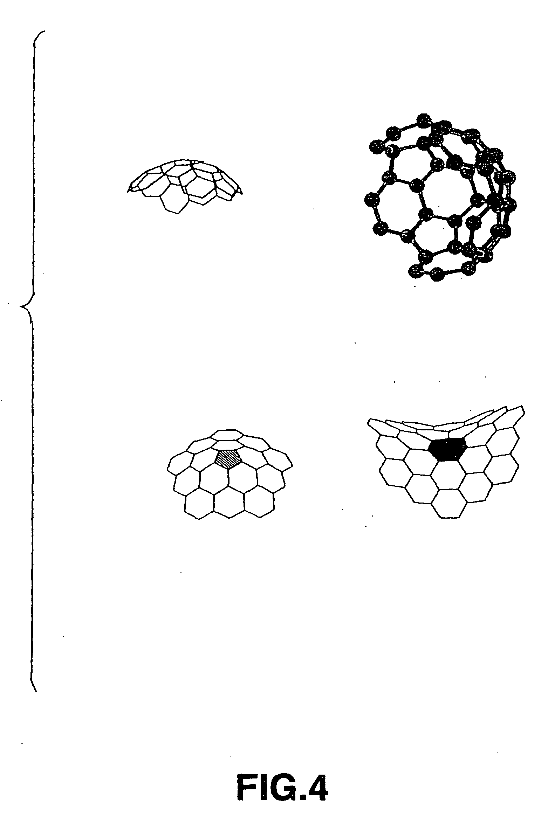

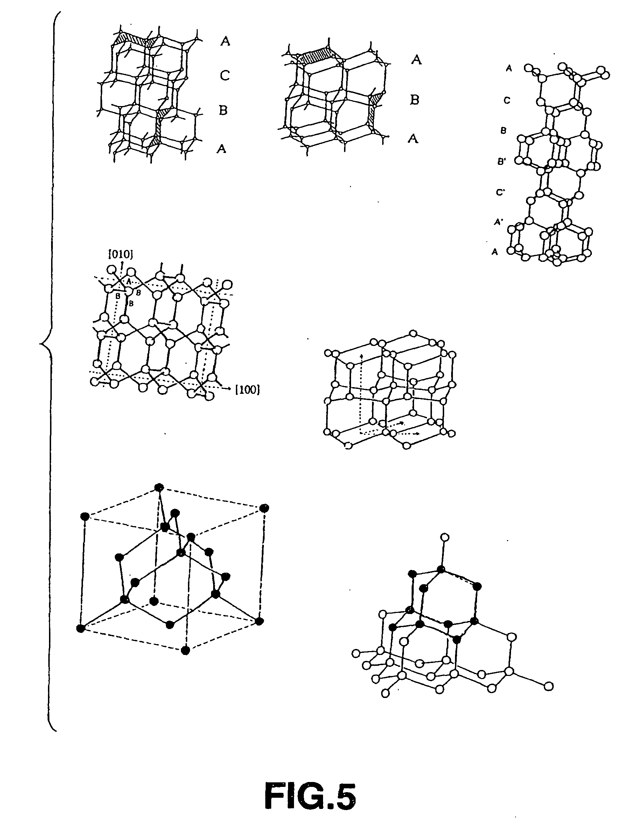

Fig.3 shows a variety of carbon clusters, each composed of a large number of carbon atoms and each having the structure of a closed surface similar to that of a sphere, an elongated ball and so forth. In Fig.3, molecular fullerenes are also shown. Fig.4 shows a variety of carbon clusters the spherical structures of which are partially interrupted. These types of the carbon clusters feature open ends in the structures. A large number of such structures may be seen as by-products in the process of the fullerene manufacturing process by arc discharge. If the major portion of the carbon atoms of the carbon cluster are bound in an SP³ bond, a diamond structure is produced, such as is shown in the structure of the various clusters shown in Fig.5.

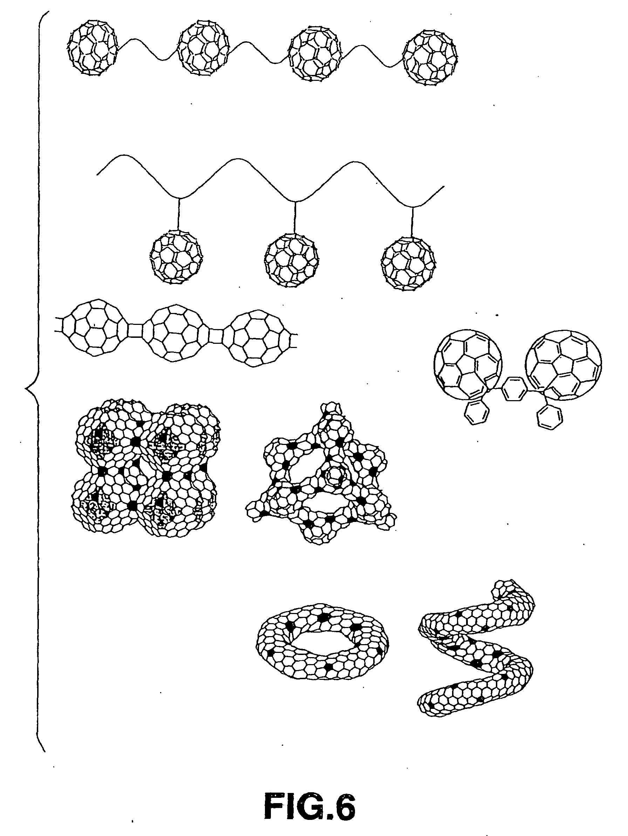

Fig.6 shows several examples in each of which different clusters are bound together. The present invention may be applied to this type of the structure.

In the proton conductor containing, as main component, the aforementioned carbonaceous material having proton dissociative groups, protons tend to be dissociated from the groups, even in a dried state. Moreover, these protons are able to exhibit high conductivity over a wide temperature range including the ambient temperature , such as a temperature range at least from 160°C to -40°C. Although this proton conductor exhibits sufficient proton conductivity even in a dried state, the presence of the moisture may be tolerated. Such moisture may be that intruded from outside.

Although any optional carbonaceous material may be used as the powder of a carbonaceous material 4 used as an electrode material, it is particularly desirable that needle-like carbonaceous materials, for example, carbon nano-tubes or needle-like graphite, such as VGCF manufactured by TOHO RAYON KK, are preferably contained in the powder of a carbonaceous material.

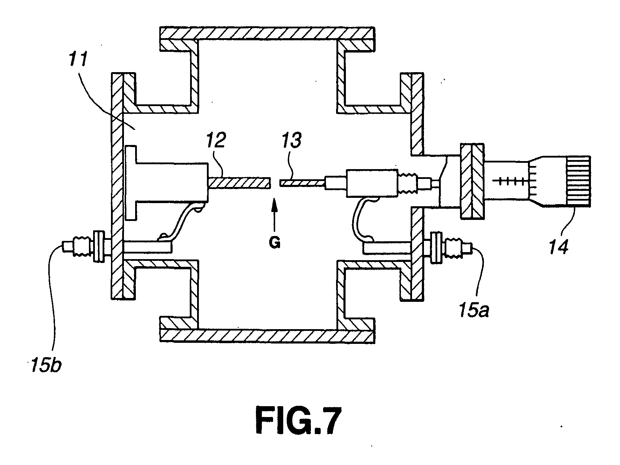

Fig.7 shows a typical arc discharge device used for the preparation of a carbonaceous material including carbon nano-tubes. In the present apparatus, a negative electrode 12 and a positive electrode 13, both made up of a rod of carbon, such as graphite, are arranged facing each other with a gap G in-between within a reaction chamber 11, such as a vacuum chamber. The rear end of the positive electrode 13 is connected to a linear movement introducing mechanism 14. The electrodes 13, 12 are connected to current introducing terminals 15a, 15b, respectively.

If, in the above arrangement, the inside of the reaction chamber 11 is evacuated and subsequently charged with rare gases, such as helium, and the DC current is supplied to the respective electrodes, an arc discharge is produced across the negative electrode 12 and the positive electrode 13. Thus, a soot-like carbonaceous material is deposited on the inner surface of the reaction chamber 11, that is on the sidewall surface, ceiling surface, bottom surface and on the negative electrode 12. Meanwhile, if a small-sized vessel is attached to e.g., the sidewall surface, the soot is also deposited therein.

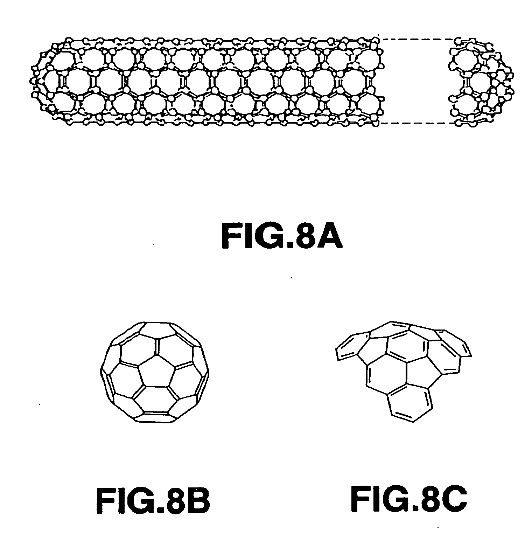

In the soot-like carbonaceous material, recovered from the reaction chamber 11, there are contained carbon nano-tubes, shown in Fig.8A, C60 fullerene, shown in Fig.8B, C70 fullerene, not shown, and carbon soots, shown in Fig.8C. These carbon soots are those having a curvature which obstructed the growth to fullerene molecules or carbon nano-tubes. By way of a typical composition, this soot-like carbonaceous material may be made up of 10 to 20% of fullerene, such as C60 or C70 and a few % of carbon nano-tubes, with the balance being a large quantity of the carbon soot.

In the above-described carbonaceous material, 20 wt% or less of a metal having a catalytic action of separating a hydrogen molecule to a hydrogen atom and further to a proton and to an electron may preferably be carried by any suitable known method on at least the surface of the carbonaceous material. The metal exhibiting such a catalytic action may be exemplified by, for example, platinum or platinum alloys. If such catalytic metal is carried as described above, the efficiency of the cell reaction may be higher than otherwise.

If the above-mentioned needle-like carbonaceous material is used, the fuel electrode 2 or the oxygen electrode 3 may be formed directly on the proton conductor film 1 by, for example, a spraying method or by a dripping method.

In the case of the spraying method, the aforementioned carbonaceous material is dispersed in water or in a solvent, such as ethanol, and directly sprayed onto the proton conductor film 1. In the case of the dripping method, the aforementioned carbonaceous material is similarly dispersed in water or in a solvent, such as ethanol, and directly dripped onto the proton conductor film 1.

This produces a heaped stated of the aforementioned carbonaceous material on the proton conductor film 1. Since the carbon nano-tubes are in the form of elongated fibers each approximately 1 nm in diameter and 1 to 10 µm in length, whilst the needle-like graphite is in the form of a needle 0.1 to 0.5 µm in diameter and 1 to 50 µm in length, these carbon nano-tubes and the needle-like graphite are entangled together to form an optimum layered product without the necessity of using a binder. Of course, a binder may also be used as necessary.

The fuel electrode 2 and the oxygen electrode 3, formed as described above, need not be independent films, and hence are not required to exhibit mechanical strength and may be of an extremely thin thickness of, for example, 10 µm or less, such as on the order of 2 to 4 µm.

In the above-described fuel cell, any suitable material exhibiting protonic conductivity may be used as the proton conductor film 1. For example, a proton conducting material may be coated on and carried by a separator for use as the proton conductor film 1.

Specifically, the materials usable as the proton conductor film 1 may be enumerated by a polymer material capable of conducting protons (hydrogen ions), such as perfluorosulfonic acid resin, for example, Nafion(R) manufactured by Du Pont SA.

As proton conductors, developed only recently, polymolybdenic acids or oxides having a large number of hydrates, such as H₃Mo₁₂PO₄₀·29H₂O or Sb₂O₅·5.4H₂O, may be used.

If placed in a wet state, these polymer materials exhibit high proton conductivity at or near ambient temperature.

Taking the perfluorosulfonic acid resin as an example, protons electrically dissociated from the sulfonic acid group is bound with the moisture taken in large quantities into the high molecular matrix by a hydrogen bond to generate protonated water, that is oxonium ions (H₃O⁺), such that protons can be smoothly migrated in the high molecular matrix in the form of these oxonium ions. So, this type of the matrix material may exhibit appreciably high proton conductivity even at or near ambient temperature.

Alternatively, a proton conductor having a conduction mechanism totally different from that of the aforementioned materials may also be used.

These alternative materials are composite metal oxides having a perovuskite structure, such as Yb-doped SrCeO₃. These composite metal oxides having a perovuskite structure, have been found to exhibit protonic conductivity without having recourse to the moisture as the medium for movement. In these composite metal oxides, the protons are inferred to be conducted by channeling by themselves through oxygen ions forming the skeleton of the perovuskite structure.

However, the necessity for humidification presents itself even with this proton conductor film 1. It is therefore desirable to use a proton conductor similar to the proton conductor 5, that is a proton conductor having, as a matrix material, a carbonaceous material composed mainly of carbon and having proton dissociative groups introduced therein.

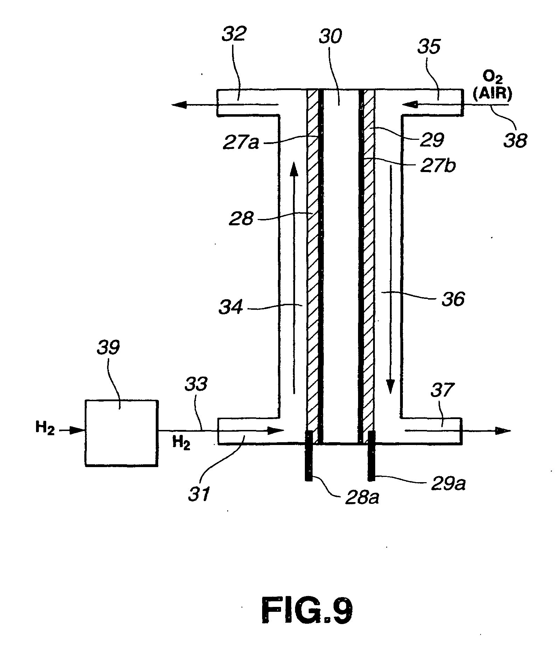

Fig.9 shows a specified illustrative structure of a fuel cell having the aforementioned electrodes and proton conductor therein.

This fuel cell includes a negative electrode (fuel electrode or hydrogen electrode) 28 and a positive electrode (oxygen electrode) 29, having catalysts 27a and 27b intimately bonded thereto or scattered therein, and a proton conductor unit 30 between these electrodes. From the negative electrode 28 and the positive electrode 29 are derived terminals 28a, 29a for connection to external circuitry.

In this fuel cell, hydrogen is supplied in use via an inlet 31 on the side negative electrode 28, so as to be discharged via an outlet 32, which may optionally be omitted. As the fuel (H₂) traverses a channel 34, protons are generated and migrated along with protons generated in the proton conductor unit 30 towards the positive electrode 29 where they are reacted with oxygen (air) 38 supplied via an inlet 35 to the channel 36 to flow towards the outlet 37 to recover a desired electromotive force.

In the above-described arrangement, a hydrogen occlusive alloy or a carbonaceous material for hydrogen occlusion is stored in a hydrogen supply source 39. This material may also have hydrogen occluded at the outset and so as to be accommodated in this state in the hydrogen supply source 39.

The present invention is further explained with reference to an Example and a Comparative Example.

### Example 1

Fullerene (C₆₀ or C₇₀) in a sulfonated form is deposited on an electrode mainly composed of a carbon material, as shown in Fig.2. Since this deposited material is dissolved in alcohol or THF, a 1M solution thereof was applied dropwise so that the deposited material will amount to 1 wt% based on the electrode weight. Dripping was with a filler. The solvent was sufficiently dried in a dry atmosphere to measure output characteristics under a condition that a dry hydrogen gas was circulated by a fuel electrode and dry air was circulated by an oxygen electrode. An output change was measured in relation to the time elapsed.

### Comparative Example 1

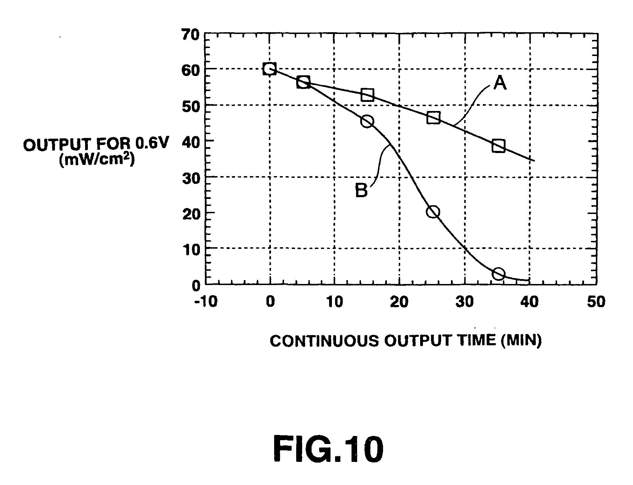

A high molecular solid electrolyte was added at the same weight ratio to the electrode used in Example 1. Output evaluation was also carried out under the same condition as in Example 1. Fig. 10 shows output-time dependency of the example and comparative example.

### Industrial Applicability

According to the present invention, optimum proton conductivity can be maintained even in a dry atmosphere to achieve a fuel cell in which output lowering may be prevented from occcurring.

## Claims

1. A fuel cell having a fuel electrode and an oxygen electrode arranged facing each other with a proton conductor film in-between,
said fuel electrode and/or the oxygen electrode comprising powders of a carbonaceous material as an electrode material, there being on the surfaces of said fuel electrode and the oxygen electrode a proton conductor comprised of a carbonaceous material mainly composed of carbon and proton dissociative groups introduced in said carbonaceous material.

2. The fuel cell according to claim 1 wherein said powder of a carbonaceous material contain a needle-like carbonaceous material.

3. The fuel cell according to claim 2 wherein said needle-like carbonaceous material is carbon nano-tubes or needle-like graphite.

4. The fuel cell according to claim 1 wherein said fuel electrode and/or the oxygen electrode carries a metal catalyst.

5. The fuel cell according to claim 4 wherein said metal catalyst is platinum or platinum alloys.

6. The fuel cell according to claim 1 wherein a proton conductor forming said proton conductor film is of the same material as the proton conductor present on the surfaces of powders of a carbonaceous material.

7. The fuel cell according to claim 1 wherein the carbonaceous material forming a matrix of said proton conductor includes a carbon cluster or carbon nano-tubes.

8. A method for the preparation of a fuel cell comprising:
adding powders of a carbonaceous material as a material for a fuel electrode and/or an oxygen electrode into a solvent containing a proton conductor comprised of a carbonaceous material mainly composed of carbon and proton dissociative groups introduced into said carbonaceous material; and
coating the surfaces of said powder of a carbonaceous material with said proton conductor.
